(19) Europäisches Patentamt
European Patent Office
Office européen des brevets

(11)  **EP 2 633 507 B1**

(12)  **FASCICULE DE BREVET EUROPEEN**

(45) Date de publication et mention de la délivrance du brevet:
**19.12.2018  Bulletin 2018/51**

(21) Numéro de dépôt: **11776408.4**

(22) Date de dépôt: **25.10.2011**

(51) Int Cl.:
*G08C 17/02* *(2006.01)*      *H04L 29/06* *(2006.01)*

(86) Numéro de dépôt international:
**PCT/EP2011/068634**

(87) Numéro de publication internationale:
**WO 2012/055857 (03.05.2012 Gazette 2012/18)**

(54) **PROCÉDÉ DE FONCTIONNEMENT D'UNE UNITÉ MOBILE DE COMMANDE D'UNE INSTALLATION DOMOTIQUE**

VERFAHREN FÜR DEN BETRIEB EINER MOBILEN STEUEREINHEIT EINER DOMOTIKANLAGE

METHOD OF OPERATING A MOBILE CONTROL UNIT OF A HOME-AUTOMATION INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2010  FR 1058765**

(43) Date de publication de la demande:
**04.09.2013  Bulletin 2013/36**

(73) Titulaire: **SOMFY ACTIVITES SA**
**74300 Cluses (FR)**

(72) Inventeurs:
• **PAYAN, Pascal**
**F-74970 Marignier (FR)**
• **PELLARIN, Florent**
**F-74370 Pringy (FR)**
• **GREHANT, Bernard**
**F-74300 Nancy-sur-Cluses (FR)**

(74) Mandataire: **Novaimo**
**ActiTech 8**
**60 avenue Marie Curie**
**Archamps Technopole**
**74166 Saint Julien-en-Genevois Cedex (FR)**

(56) Documents cités:
**WO-A1-2005/048530      WO-A1-2009/017984**
**FR-A1- 2 898 719      US-A1- 2009 080 348**

## Description

L'invention concerne le domaine de la commande d'équipements domotiques fixés dans un bâtiment ou à ses abords, tels des équipements de fermeture ou de protection solaire motorisés, de chauffage et climatisation, d'éclairage, de gestion de piscine individuelle.

Ces équipements domotiques communiquent entre eux à l'aide d'un réseau domotique de type radiofréquences ou par courants porteurs, et peuvent communiquer avec des serveurs distants.

La présence d'équipements de fermeture (portes, serrures, volets) pose un problème de sécurité et d'authentification, aussi bien lors de la configuration d'une installation que lors de son fonctionnement, notamment dans la perspective d'un recours à des éléments mobiles de commande réalisés à partir de moyens communicants banalisés tels des assistants numériques personnels ou des téléphones portables tels des smartphones.

Lors du fonctionnement, le nombre croissant d'équipements domotiques à commander rend de plus nécessaire la mise en oeuvre d'ergonomies simplifiées pour sélectionner l'équipement voulu, sans pour autant avoir recours à des menus déroulants ou des choix d'icônes peu identifiables. Ce besoin est d'autant plus marqué qu'une partie vieillissante de la population est confrontée à des problèmes de vision.

La demande de brevet WO 03/007266 décrit la commande d'un objet à distance à l'aide d'un pointeur muni d'une source lumineuse.

La demande de brevet WO 03/088486 décrit un procédé d'évaluation de champ proche permettant de s'assurer, lors de la transmission d'une commande d'appairage, qu'un émetteur de cette commande est situé à proximité immédiate d'un récepteur.

Le brevet US 7,724,687 prévoit qu'une donnée confidentielle telle une « clé-maison » ne peut être transmise d'un émetteur d'ordres vers un autre émetteur d'ordres que si un récepteur d'ordres valide préalablement cette transmission.

La demande de brevet WO 03/081352 décrit un procédé de changement de clé commune tandis que le brevet US 7,683,754 décrit un procédé de sélection d'un groupe pour la transmission d'une clé commune, par exemple en utilisant la tension d'alimentation des seuls éléments du groupe.

La demande de brevet WO 2010/049383 décrit une unité portable apte à communiquer sans contact en champ proche avec des étiquettes électroniques disposées sur des équipements domotiques et/ou en des endroits particuliers d'un bâtiment, par exemple à l'entrée des pièces d'un logement.

Les demandes de brevet EP 0 973 126 et EP 1 164 540 décrivent l'utilisation du code SIM de carte mémoire d'un téléphone mobile, et éventuellement d'un lecteur d'empreinte digitale de ce téléphone mobile, pour sécuriser la commande d'équipements. De même pour le brevet US 6,535,107 qui concerne le domaine de l'identification d'un conducteur de véhicule. Dans ce cas, un transpondeur est inséré dans le téléphone mobile afin de permettre l'échange de données avec le système de sécurité du véhicule.

Dans la demande de brevet EP 1 482 718, le transmetteur destiné à établir la communication avec l'élément à commander est raccordé au téléphone mobile par la prise jack d'écouteur ou par couplage et utilise une modulation DTMF ou analogue pour transmettre les signaux codés depuis le téléphone mobile vers le transmetteur.

Le brevet EP 0 913 979 décrit également l'adjonction à un téléphone mobile d'un émetteur supplémentaire pour la commande à distance d'un objet. Un mode spécifique permet la commande à distance sans utilisation de la radiocommunication mobile et le code d'abonné SIM de la carte est utilisé comme moyen d'authentification de l'utilisateur. La structure cellulaire du réseau de communication mobile est utilisée comme possibilité de contrôle de l'authentification.

La demande de brevet US 2002/0031228 décrit un téléphone mobile apte à communiquer à la fois avec un réseau public de communication de type GSM et, à faible distance, avec des dispositifs Bluetooth, par exemple des serrures de chambres d'hôtel ou de véhicule de location. Une connexion entre le téléphone mobile et un serveur distant est assurée via le réseau GSM. Le serveur distant transmet la clé d'authentification Bluetooth au téléphone mobile, sous forme cryptée et décryptable par le téléphone mobile. La clé d'authentification Bluetooth est ensuite transmise par le téléphone mobile au dispositif Bluetooth au moyen du transmetteur Bluetooth. Le code personnel d'identification PIN de l'utilisateur peut être utilisé pour sécuriser la transmission.

La demande de brevet DE 10 2005 038 471 décrit similairement un terminal mobile communiquant aussi bien sur réseau GSM que sur Bluetooth ou similaire, pour permettre l'accès à des véhicules de location. L'utilisateur s'identifie avec un mot de passe sur le terminal mobile.

La demande de brevet DE 10 2007 059 246 décrit un même dispositif, dans le cas d'une commande de porte de garage.

La demande WO 00/57375 décrit un système de sécurité antivol pour équipements électriques domestiques. Chaque fois que l'équipement est mis sous tension, il ne fonctionne qu'à la réception d'un code de libération, transmis par un contrôleur de maison à travers l'alimentation électrique ou un réseau local. Tout équipement déplacé de sa position autorisée, c'est-à-dire ne recevant pas son code de libération de la part du contrôleur de maison, cesse de fonctionner. Il est prévu que le contrôleur de maison peut lui-même être volé en même temps que l'équipement électrique domestique. Pour pallier cet inconvénient, le contrôleur de maison comprend un moyen de localisation par exemple par l'intermédiaire d'un réseau cellulaire ou par GPS et il peut transmettre sa position à un centre opérationnel distant, en utilisant par exemple le réseau internet ou GSM. Le contrôleur de maison n'a pas d'autre fonction dans une installation que d'assurer le blocage ou le déblocage des équipements en cas de déconnexion et reconnexion de ceux-ci sur le réseau électrique.

La demande de brevet WO 01/71685 décrit une télécommande universelle et des procédés aptes à afficher sur l'écran de la télécommande des icônes relatives aux équipements à portée radio de la télécommande, et/ou des interfaces de commande de ces équipements.

Un procédé comparable est aussi décrit dans la demande de brevet FR 2 898 719.

La demande de brevet FR 2 924 890 décrit un procédé de sélection automatique d'un périphérique tel un équipement domotique utilisant un critère de proximité : un message est diffusé vers tous les périphériques et chacun d'eux répond. En fonction du niveau de signal reçu, on repère automatiquement le périphérique le plus proche pour lui envoyer une commande.

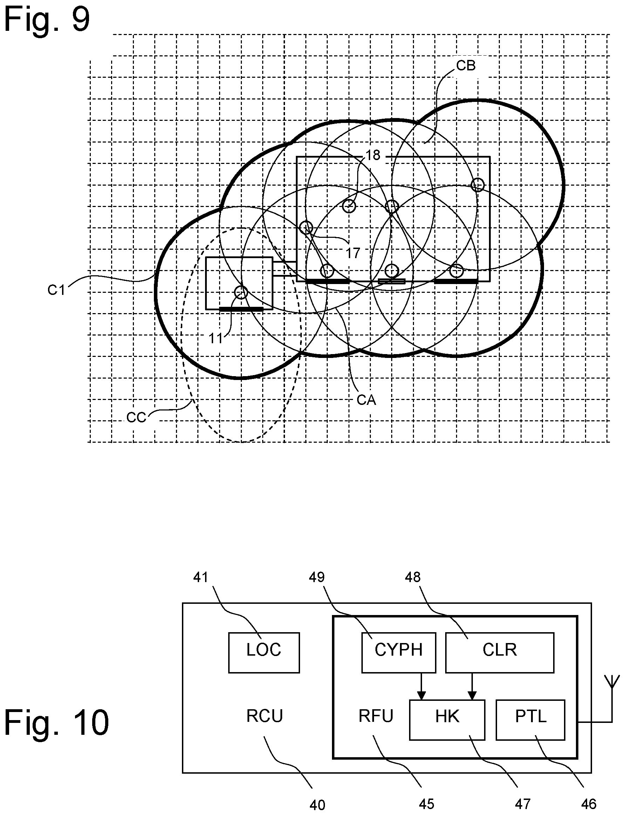

Le brevet US 7,289,014 décrit un système de commande de barrière d'accès tel que portail ou porte de garage, notamment en fonction de la position et/ou de la direction de mouvement d'un véhicule au voisinage de la barrière d'accès. Il est prévu (figure 9) que des positions particulières d'un transpondeur ou « dispositif de proximité » puissent être apprises à l'aide d'un système de localisation satellite GPS, de manière à ce que le système de commande provoque une action prédéterminée quand le « dispositif de proximité » retrouve une telle position, après apprentissage. Par exemple, si le dispositif de proximité est dans une position dite d'action, alors une action sur un bouton provoque une commande d'ouverture, ce qui n'est pas le cas en dehors de cette position d'action.

Le brevet US 6,563,430 décrit un dispositif de commande à distance dont l'interface utilisateur de commande dépend de la localisation du dispositif de commande, à l'intérieur d'une maison par exemple. De nombreuses méthodes de localisation sont décrites.

Le brevet US 7,363,028 décrit également ce type de dispositif de commande et notamment une méthode d'identification radiofréquences de l'équipement le plus proche du dispositif de commande, par décroissance progressive de la puissance d'émission. Ce dispositif est utilisé pour la commande de différents équipements HiFi dans une pièce.

Le brevet US 7,110,761 décrit l'usage d'un dispositif de pointage directionnel pour établir une connexion sans fil entre le dispositif de pointage et un autre dispositif, ciblé par le dispositif de pointage directionnel.

Dans ces trois derniers documents, il n'est pas fait référence à une clé commune permettant notamment de sécuriser une fonction d'accès dans le bâtiment.

Le but de l'invention est de fournir un procédé de fonctionnement d'une unité mobile de commande remédiant aux inconvénients évoqués précédemment et améliorant les procédés connus de l'art antérieur. En particulier, l'invention propose un procédé de fonctionnement sécurisé dans lequel il est possible de configurer et commander de manière simple et conviviale grâce à une unité mobile de commande, tel un téléphone portable, différents équipements d'une installation, tout en évitant les conséquences d'une perte ou d'un vol de l'unité mobile de commande quand celle-ci est utilisée en tant qu'outil d'installation.

Selon l'invention, le procédé régit le fonctionnement d'une unité mobile de commande destinée à faire partie d'une installation domotique comprenant des éléments incluant des équipements fixés dans un bâtiment, les éléments de l'installation communiquant sur un réseau domotique, chaque élément étant muni d'un identifiant qui lui est propre et d'une clé d'authentification, dite « clé commune » identique pour tous les éléments du réseau domotique et authentifiant l'appartenance d'un élément au réseau domotique. Le procédé comprend :

- une étape de localisation de l'unité mobile de commande par rapport à un contour contenant les éléments de l'installation domotique, l'unité mobile comprenant un moyen de liaison réseau au réseau domotique,
- une étape d'invalidation automatique de la clé commune contenue dans l'unité mobile de commande dans le cas où l'unité mobile de commande est située à l'extérieur du contour.

Le contour peut être défini par géolocalisation, l'unité mobile de commande comprenant un moyen de localisation délivrant une information de position.

L'information de position peut être définie par un maillage spatial apte à différencier les positions respectives de deux éléments de l'installation domotique.

Le contour est défini par une enveloppe des limites de communication radio entre l'unité mobile de commande et chaque équipement.

Le procédé peut comprendre une étape de diffusion d'un message de demande de réponse par l'unité mobile de commande et une étape d'émission d'un message de réponse par chaque équipement ayant reçu le premier message.

Une des étapes d'émission peut être réalisée à puissance réduite.

L'étape d'invalidation peut comprendre l'effacement de la clé commune et/ou un blocage de l'utilisation de la clé commune contenue dans l'unité mobile de commande.

L'étape d'invalidation peut comprendre un changement de la clé commune contenue dans tous les éléments, à l'exception de l'unité mobile de commande.

L'étape d'invalidation peut être activée si l'utilisateur de l'unité mobile de commande a été identifié en tant qu'utilisateur particulier d'un premier type et/ou n'est pas activée si l'utilisateur de l'unité mobile de commande a été identifié en tant qu'utilisateur particulier d'un deuxième type.

L'identification en tant qu'utilisateur particulier peut résulter de l'un au moins des événements suivants :

- réception d'une commande particulière par l'unité mobile de commande,
- émission d'une commande particulière par l'unité mobile de commande.

Selon l'invention, le moyen de liaison à un réseau domotique, comprenant au moins une mémoire de clé commune et apte à communiquer sur un réseau domotique à l'aide de messages authentifiés grâce à la clé commune, comprend un moyen d'invalidation automatique de la clé commune.

Quand il est activé, le moyen d'invalidation peut inhiber la clé commune quand aucun signal de réponse n'est reçu en réponse à un message d'interrogation des équipements du réseau, émis par le moyen de liaison.

Le moyen de liaison peut comprendre des moyens de connexion à un téléphone mobile.

Selon l'invention, l'unité mobile de commande comprend un moyen de liaison défini précédemment et des moyens matériels et/ou logiciels de mise en oeuvre du procédé de fonctionnement défini précédemment.

Selon l'invention, l'installation comprend une unité mobile de commande définie précédemment.

L'invention porte aussi sur un programme informatique comprenant un moyen de code de programme informatique adapté à la réalisation des étapes du procédé défini précédemment, lorsque le programme est exécuté sur un ordinateur.

L'invention sera mieux comprise à la lecture de la description qui va suivre, donnée uniquement à titre d'exemple et faite en se référant aux dessins annexés sur lesquels :

La figure 1 représente sous forme de schéma fonctionnel une installation domotique et une unité mobile de commande selon l'invention.

La figure 2 représente spatialement l'installation domotique et l'unité mobile de commande.

La figure 3 est un ordinogramme d'un mode d'exécution d'un procédé de fonctionnement selon l'invention.

La figure 4 est un ordinogramme d'un premier mode d'exécution d'une étape de localisation du mode d'exécution du procédé de fonctionnement.

La figure 5 est un ordinogramme d'un deuxième mode d'exécution d'une étape de localisation du mode d'exécution du procédé de fonctionnement.

La figure 6 est un ordinogramme d'une variante d'exécution d'une étape du mode d'exécution du procédé de fonctionnement.

La figure 7 représente un contour utilisé dans le premier mode d'exécution.

La figure 8 représente un autre contour utilisé dans le premier mode de réalisation.

La figure 9 représente un contour utilisé dans le deuxième mode de réalisation.

La figure 10 représente partiellement l'unité mobile de commande pour illustrer des détails de réalisation.

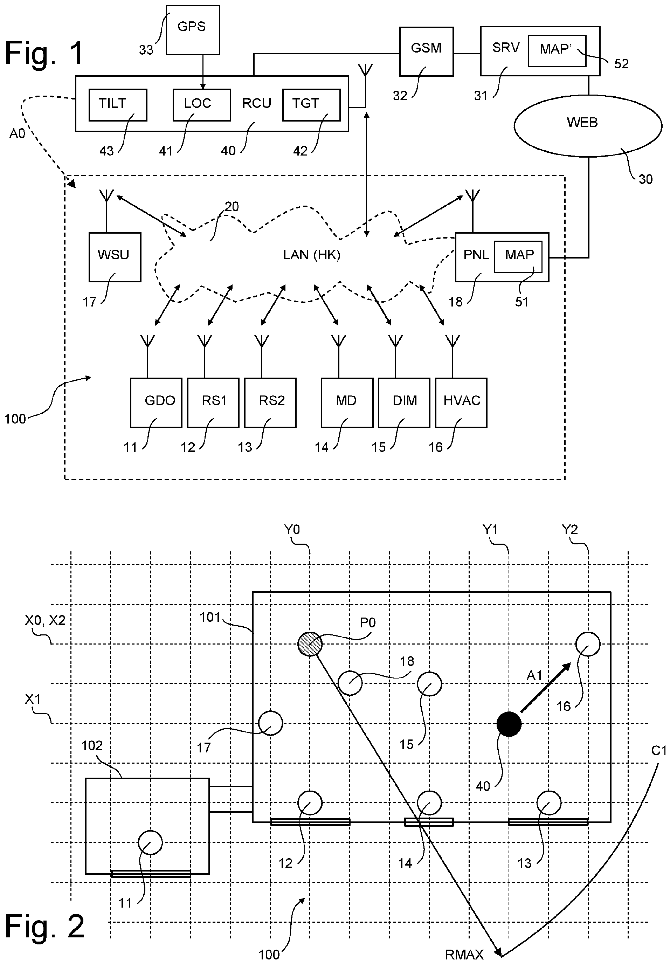

La figure 1 représente sous forme de schéma fonctionnel une installation domotique 100 et une unité mobile de commande 40 selon l'invention. La figure représente également les liaisons de l'installation domotique et de l'unité mobile de commande avec l'environnement.

L'installation domotique comprend des équipements. Certains équipements sont de type actionneur et comprennent en particulier un ou plusieurs actionneurs électriques, notamment des actionneurs de manoeuvre d'éléments mobiles comme un élément mobile de fermeture, de protection solaire ou d'occultation. D'autres équipements sont de type capteur ou de type boîtier de commande. Ainsi, dans l'exemple de la figure 1, l'installation comprend :

- un premier équipement 11 de type actionneur pour porte de garage,
- un deuxième équipement 12 de type actionneur pour volet roulant,
- un troisième équipement 13 également de type actionneur pour volet roulant,
- un quatrième équipement 14 de type actionneur pour serrure électrique pour porte principale,
- un cinquième équipement 15 de type actionneur gradateur (« dimmer ») pour dispositif d'éclairage à intensité variable.
- un sixième équipement 16 de type actionneur de chauffage-climatisation,
- un septième équipement 17 de type boîtier de commande et capteur, sous forme d'un interrupteur mural,
- un huitième équipement 18 de type boîtier de commande et capteur incluant un écran d'affichage, une interface de commande tactile et incluant par exemple une sonde de température.

Bien entendu, l'installation peut comprendre un nombre beaucoup plus élevé de boîtiers de commande et/ou de capteurs et peut comprendre d'autres équipements en plus ou remplacement des équipements énumérés précédemment, notamment des équipements de type actionneur de store de terrasse, de traitement de l'eau, de ventilation, etc., y compris de type domestique comme une machine à laver, un téléviseur etc. L'invention s'applique cependant préférentiellement à des équipements occupant une place fixe dans le bâtiment.

Tous les équipements communiquent entre eux sur un même réseau domotique 20, de type local (LAN) et utilisant un protocole commun, par exemple io-homecontrol, EIB, Zigbee etc. (marques déposées). Préférentiellement, le réseau domotique est de type radiofréquences, ce qui est représenté par des flèches bidirectionnelles et un symbole d'antenne sur chaque équipement. Alternativement, plusieurs réseaux locaux de protocole et/ou de média différents sont utilisés pour former le réseau domotique 20. Les équipements comprennent donc chacun un moyen de liaison réseau au réseau domotique 20.

Tous les équipements partagent une clé commune, dite clé maison HK. Cette clé est par exemple un mot de 64 ou 128 bits, logé dans une mémoire de chaque équipement et un algorithme d'authentification utilisant la clé commune est utilisé pour permettre à un équipement de reconnaître qu'un ordre de commande ou un message quelconque est bien issu d'un autre équipement de l'installation.

Par la suite, on dira pour simplifier qu'un message « contient la clé commune » ou « comprend la clé commune » quand son émetteur est authentifié par la clé commune. En pratique, cette authentification est réalisée par un dialogue entre l'émetteur du message et son destinataire, ou est réalisée par un cryptage du contenu du message à l'aide de la clé commune, ou encore nécessite à la fois un dialogue et un cryptage du contenu du message. La clé commune n'est donc pas contenue, en tant que telle, dans les messages.

Le huitième équipement 18 peut être connecté à un réseau partagé 30 de type internet par une passerelle, non représentée. Un serveur distant 31 peut aussi être connecté au réseau partagé, rendant ainsi possible une communication entre le huitième équipement et le serveur distant.

Une unité mobile de commande 40 comprend un moyen de liaison réseau au réseau domotique 20, ce moyen de liaison réseau étant également représenté par le symbole d'une antenne et une double flèche. Ce moyen de liaison permet la communication entre l'unité mobile de commande et n'importe lequel des équipements du réseau domotique.

L'unité mobile de commande comprend un moyen de localisation 41 permettant de déterminer la position de l'unité mobile de commande. Elle peut par ailleurs être reliée au serveur 31 par un réseau de communication longue distance 32, par exemple de type réseau de communication pour téléphones portables GSM. Le moyen de localisation 41 utilise préférentiellement une ressource externe 33, par exemple des satellites de géolocalisation de type GPS ou Galiléo fournissant des signaux.

Optionnellement, l'unité mobile de commande peut de plus être munie d'un moyen de visée 42. Avantageusement, le moyen de visée comprend un moyen télémétrique 44 apte à fournir une information de distance entre l'unité mobile de commande et un objet-cible visé par le moyen de visée. Le moyen de visée comprend par exemple un objectif photographique de focale variable avec dispositif autofocus, comme décrit en figure 9.

Le moyen de visée peut comprendre un moyen 43 de mesure de l'orientation de l'unité mobile de commande, notamment un moyen d'inclinaison, comprenant par exemple un accéléromètre, notamment un accéléromètre 3D.

Le moyen de localisation peut également comprendre un accéléromètre pour établir une partie d'une information de localisation. Avantageusement, un même accéléromètre 3D est utilisé dans le moyen de localisation, pour des mesures de déplacement par rapport à un point de référence et dans le moyen de mesure d'orientation pour des mesures d'orientation de l'unité mobile de commande.

Un téléphone portable équipé des moyens matériels décrits ci-dessus et de moyens logiciels aptes à exécuter les procédés décrits par la suite peut avantageusement servir d'unité mobile de commande. Le moyen de liaison réseau au réseau domotique est par exemple logé dans la carte SIM du téléphone, ou dans la batterie du téléphone, ou il est lié au téléphone par une connexion amovible, comme une prise jack. Le moyen de liaison réseau est détaillé sous la référence 45 sur la figure 10 : il comprend, en mémoire permanente 46, le protocole PTL du réseau domotique et il comprend, en mémoire effaçable 47, la clé commune HK, si celle-ci a été transmise au moyen de liaison réseau. Pour des raisons de sécurité, le moyen de liaison réseau, fonctionnellement lié à l'unité mobile de commande, est cependant matériellement distinct du téléphone et ne peut être fourni par exemple que par un fabricant d'un des équipements du réseau domotique. Ce caractère distinctif du moyen de liaison réseau apparaît sous la forme d'un trait gras.

L'unité mobile de commande devient un élément de l'installation 100 dès lors qu'elle communique avec un des équipements, appartenance qui est symbolisé par une flèche pointillée A0. Cependant, cette appartenance de l'unité mobile de commande à l'installation peut être seulement provisoire, notamment dans le cas où l'unité mobile de commande est utilisée comme un outil de configuration par un installateur. En définitive, l'installation comprend une pluralité d'éléments, à savoir l'unité mobile de commande et l'ensemble des équipements décrits ci-dessus, chaque équipement étant un élément de l'installation. Les éléments sont tous de type actif, c'est-à-dire qu'ils sont aptes à émettre ou à recevoir un ordre de commande, ou encore une donnée de mesure issue d'un capteur.

La figure 2 représente spatialement un petit bâtiment comprenant l'installation domotique et l'unité mobile de commande, selon un maillage spatial en plan représenté par deux réseaux perpendiculaires de lignes équidistantes en trait pointillé, dont les intersections sont des noeuds du maillage, repérés par deux coordonnées (X, Y). Alternativement, le maillage spatial comprend avantageusement une troisième dimension (Z), et chaque noeud est repéré par trois coordonnées (X, Y, Z). Le maillage spatial est apte à différencier les positions respectives de deux équipements de l'installation domotique, c'est-à-dire que ces deux équipements présentent des jeux de coordonnées différents. Chaque équipement est représenté centré sur le noeud le plus proche. La distance entre deux lignes consécutives du maillage (le pas du maillage) est donc inférieure ou égale à la distance minimum séparant deux équipements.

Le maillage spatial doit donc être suffisamment précis, non seulement pour être à même de distinguer les équipements actuels de l'installation mais aussi pour permettre l'implantation future de nouveaux équipements. Un maillage spatial beaucoup plus fin que celui représenté peut être utilisé, mais en offrant alors un excès de précision par rapport au besoin. Avantageusement, le maillage spatial peut être par exemple deux fois plus précis, voire 10 fois plus précis, que celui représenté, en vue de l'installation possible d'autres équipements dans des positions intermédiaires. Un pas de maillage de 10 cm correspond à une valeur préférée. La figure 2, pour laquelle le maillage est sensiblement métrique, n'est donc pas représentative d'un maillage réel.

Alternativement, le maillage présente un pas auto-adaptatif, le pas du maillage étant par exemple défini en passant progressivement d'un maillage grossier à un maillage plus fin selon l'existence ou non d'une pluralité de réponses à un message d'interrogation, ce message étant émis avec une puissance de plus en plus faible comme décrit dans le brevet US 7,363,028.

Dans le cas très simplifié de la figure 2, l'installation est répartie dans un corps principal de maison 101 et dans un garage 102 attenant au corps principal. Des cloisons internes au bâtiment ne sont pas représentées. Des baies relatives à la porte de garage, à la porte principale et aux fenêtres équipées de volets roulants sont représentées sous forme de triple trait.

L'unité mobile de commande 40 est disposée dans l'installation, sa position étant repérée par des coordonnées X1 et Y1 dans le maillage spatial. Une flèche A1 indique une direction visée par le moyen de visée de l'unité mobile de commande.

Une position particulière P0 est repérée par des coordonnées X0 et Y0. Son rôle sera décrit par la suite.

L'installation comprend des moyens matériels et/ou logiciels permettant de régir son fonctionnement conformément au procédé objet de l'invention. Les moyens logiciels peuvent notamment comprendre un moyen de code de programme informatique adapté à la réalisation des étapes du procédé selon l'invention, lorsque le programme tourne sur un ordinateur.

L'unité de commande comprend des moyens matériels et/ou logiciels permettant de régir son fonctionnement conformément au procédé objet de l'invention. Les moyens logiciels peuvent notamment comprendre un moyen de code de programme informatique adapté à la réalisation des étapes du procédé selon l'invention, lorsque le programme tourne sur un ordinateur. Les moyens matériels comprennent un moyen de localisation permettant de localiser l'unité mobile de commande par rapport à un contour contenant les éléments de l'installation domotique et un moyen d'invalidation automatique de la clé commune contenue dans l'unité mobile de commande, le moyen d'invalidation permettant, dans le cas où l'unité mobile de commande est située à l'extérieur du contour, d'inhiber la clé commune.

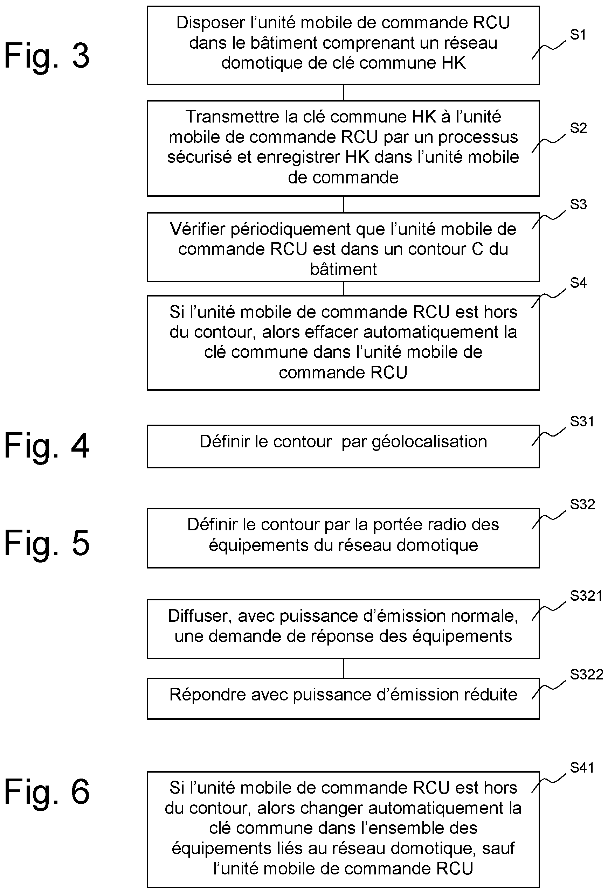

Un mode d'exécution du procédé de fonctionnement selon l'invention est décrit ci-après en référence à la figure 3.

On suppose dans ce qui suit que l'unité mobile de commande est utilisée par un installateur venu configurer l'installation, ou la diagnostiquer, ou la compléter.

Dans une première étape S1, l'unité mobile de commande est disposée dans le bâtiment équipé avec l'installation domotique des équipements se trouvant dans le bâtiment et/ou aux abords du bâtiment.

Suite à une manoeuvre particulière de l'installateur, une deuxième étape S2 est activée, dans laquelle la clé commune HK est transmise à l'unité mobile de commande.

Cette étape peut mettre en oeuvre des procédures variées. Par exemple, la clé commune est contenue dans un document confidentiel, communiqué à l'installateur par le propriétaire de l'installation. Elle est alors reportée, sous forme de caractères alphanumériques, à l'aide d'un clavier de l'unité mobile de commande. Alternativement, elle est inscrite sous forme de code à barres sur le document confidentiel et elle est lue par un appareil photographique de l'unité mobile de commande, également utilisé dans le moyen de visée. Alternativement, elle est enregistrée dans une étiquette électronique possédée par le propriétaire et transmise à l'installateur par ce dernier, l'unité mobile de commande étant apte à lire ladite étiquette électronique. Alternativement, elle est transmise via GSM par le serveur distant. Alternativement, elle est transmise, à puissance réduite, sur le réseau domotique par un équipement interne au bâtiment et sur lequel a été réalisée une manipulation particulière. Plusieurs de ces alternatives peuvent être combinées pour transmettre tout ou partie de la clé commune à l'unité mobile de commande.

Préférentiellement, la sécurisation du processus vient d'un cryptage et d'une procédure d'authentification : par exemple un code PIN connu du seul propriétaire, ou du seul installateur, permet de décrypter la clé commune.

La clé commune est alors enregistrée dans une mémoire de l'unité mobile de commande, et préférentiellement dans un module séparé RFU de cette unité mobile de commande, qui sera décrit en relation avec la figure 10, le décryptage ayant lieu dans ce module séparé.

Dans une troisième étape S3, l'unité mobile de commande vérifie périodiquement qu'elle se trouve dans une zone géographique délimitée par un contour C du bâtiment, ou, plus largement d'un contour contenant les éléments de l'installation domotique.

Le contour C est défini par une propriété d'interaction entre l'unité mobile de commande et l'installation. Deux modes de réalisation de cette propriété d'interaction sont précisés en relation avec les figures 4 et 5.

Dans une quatrième étape S4, la clé commune est automatiquement effacée dans l'unité de commande si la troisième étape a montré que l'unité mobile de commande se trouve hors de la zone géographique, c'est-à-dire en dehors du contour. Avantageusement, une temporisation, par exemple de quelques minutes, évite un effacement intempestif dans le cas où l'installateur se livre à un essai de portée.

Ainsi, si l'installateur quitte les lieux de l'installation muni de l'unité mobile de commande, il y a effacement de la clé commune. L'installation est donc protégée contre les conséquences de la perte ou du vol de l'unité mobile de commande. Cette protection est de plus immédiate ou quasiment immédiate.

La figure 4 représente un premier mode de réalisation de la troisième étape du procédé de commande, sous forme d'une première sous-étape S31 incluse dans la troisième étape. Cette sous-étape peut également être antérieure à la première étape. Selon ce premier mode de réalisation, le contour C est défini par géolocalisation.

On entend par ces termes que la position géographique du bâtiment et/ou des équipements, et au moins la position de l'unité mobile de commande est connue en valeur absolue ou en valeur relative.

Ainsi une information de position est déterminée dans l'unité mobile de commande, à l'aide de son moyen de localisation. Si l'unité mobile de commande est dans la position de la figure 2, l'information de position est par exemple le couple de coordonnées X1, Y1.

L'information de position peut être déduite de données de géolocalisation GPS, corrigées de manière à obtenir un maillage suffisamment précis mais sans précision excessive. Un pas de maillage de 10 cm est par exemple préféré. Si la précision GPS est trop grande, par exemple centimétrique, alors le dernier chiffre de coordonnées n'est pas pris en compte dans l'information de position. Si la précision GPS est trop faible, par exemple métrique, alors les déplacements mesurés par l'accéléromètre de l'unité mobile de commande sont pris en compte afin d'obtenir une localisation plus précise, correspondant au maillage désiré. On peut également améliorer la précision GPS par analyse de la puissance radio reçue depuis les équipements. Comme précisé plus haut, la précision du maillage peut être adaptée dynamiquement, selon l'ajout progressif de nouveaux équipements dans l'installation.

Les déplacements peuvent être mesurés à partir d'une position de référence, par exemple la position particulière P0. En l'absence de réception de signaux satellites GPS, ou pour réduire le coût, toute information de position peut être simplement déduite des déplacements de l'unité mobile de commande à partir de la position de référence.

Le contour C peut être défini par exemple relativement à la position de référence P0. Par exemple un premier contour C1 est un cercle de rayon prédéfini RMAX centré autour de la position de référence.

Avantageusement, le contour est défini par géolocalisation à partir de la connaissance des positions des équipements de l'installation. Par exemple, l'équipement spécifique comprend une première mémoire cartographique 51 dans laquelle ont été stockées (lors d'une étape de configuration préalable, ou au fur et à mesure que l'installateur avance dans la configuration de l'installation) les coordonnées de position de chaque équipement de l'installation. Dans l'étape de définition du contour de la zone géographique, la localisation des équipements peut être obtenue en utilisant la position courante de l'unité mobile de commande et une information de visée de chacun des équipements, cette information de visée comprenant une information d'orientation de l'unité de commande mobile et une information de distance entre l'équipement et l'unité de commande mobile. Cette information de visée est obtenue grâce au moyen de visée évoqué plus haut. Alternativement, de manière simplifiée, la localisation des équipements peut être obtenue en utilisant la position courante de l'unité mobile de commande lorsque celle-ci est disposée à proximité de l'équipement.

Alternativement, le serveur distant est utilisé pour définir le contour, celui-ci pouvant également contenir une deuxième mémoire cartographique 52 contenant les coordonnées des équipements de l'installation.

Dans ce cas, la troisième étape S3 peut contenir une sous-étape consistant à envoyer directement l'information de position au serveur distant, en utilisant le réseau de communication GSM, et à recevoir une réponse de sa part sur la présence ou non à l'intérieur du contour C. Alternativement, les informations peuvent toujours être transmises vers ou reçues depuis l'équipement spécifique, celui-ci les communiquant au serveur distant via le réseau internet.

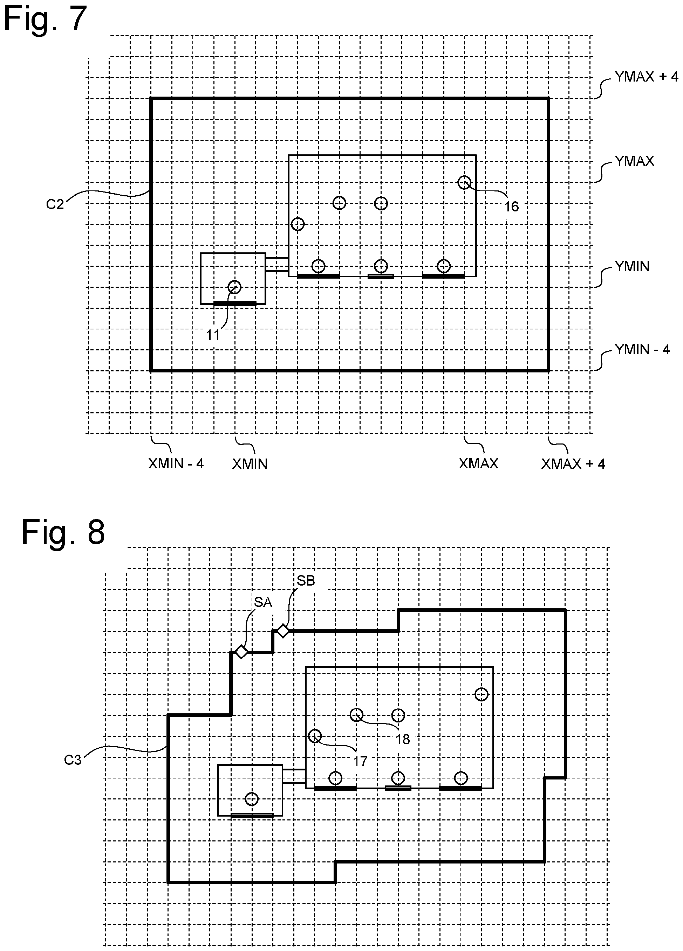

Des contours définis par géolocalisation sont décrits plus bas en relation avec les figures 7 et 8.

La figure 5 représente un deuxième mode de réalisation de la troisième étape du procédé de commande, sous forme d'une deuxième sous-étape S32 incluse dans la troisième étape. Cette sous-étape peut également être antérieure à la première étape. Selon ce premier mode de réalisation, le contour C est défini par la portée radio des équipements domotiques. Par exemple, le contour C correspond à l'enveloppe de portée maximum permettant la communication entre l'unité mobile de commande et l'un ou l'autre des équipements de l'installation.

Cette portée maximum peut être élevée. En effet, pour des équipements de bonne qualité, la portée en champ libre peut être voisine de 300 à 500 mètres. En relation avec la figure 9 sont décrites des variantes permettant de mieux sécuriser ce mode de réalisation.

La figure 6 est un ordinogramme d'une variante d'exécution de l'étape d'invalidation S4 du mode d'exécution du procédé de fonctionnement. Désignée par S41, cette étape remplace la quatrième étape S4. Cette fois, dans le cas où l'étape de localisation a montré que l'unité mobile de commande est située à l'extérieur du contour, l'invalidation de la clé commune contenue dans l'unité mobile de commande est provoquée par un changement de la clé commune dans l'ensemble des équipements sauf l'unité mobile de commande RCU, par exemple comme décrit dans la demande de brevet WO 03/081352. Cette variante d'exécution est plus lourde à mettre en oeuvre qu'une invalidation de la clé commune au sein même de l'unité mobile de commande, mais elle présente un plus fort niveau de sécurité.

La figure 7 représente un deuxième contour C2, utilisé dans le premier mode de réalisation.

Dans cet exemple, le contour C2 est simplement défini par le quadrilatère défini par les droites :

$$x = XMIN - 4, \; x = XMAX + 4$$

avec les droites :

$$y = YMIN - 4, \; y = YMAX + 4$$

XMIN, XMAX, YMIN et YMAX représentant les extrêmes des valeurs de coordonnées enregistrées dans la mémoire cartographique (ici les positions des équipements référencés 11 et 16) et une valeur de 4 mètres (ou 4 unités sur le quadrillage de la figure) étant choisie comme marge nécessitée par les essais sur site de l'unité mobile de commande. D'autres valeurs de marge, notamment plus élevées sont possibles.

La figure 8 représente un troisième contour C3, utilisé dans le premier mode de réalisation. Dans cet exemple, chaque équipement est entouré par un carré (de nouveau de 4 unités de quadrillage ou 4 mètres) et le contour C3 est le contour extérieur de l'ensemble de ces carrés. Par exemple, le point SA appartient au carré centré sur l'équipement 17 et le point SB appartient au carré centré sur l'équipement 18.

La mise en oeuvre sécurisée du premier mode de réalisation nécessite préférentiellement une interdépendance du moyen de liaison et du dispositif de localisation inclus dans l'unité mobile de commande, ce qui nécessite des précautions particulières si celle-ci comprend un téléphone mobile incluant le moyen de localisation. Par contre, ce mode de réalisation est particulièrement précis et s'applique à une unité mobile de commande totalement intégrée.

La figure 9 représente un quatrième contour C4, utilisé dans le deuxième mode de réalisation. Ce mode de réalisation est plus facile à mettre en oeuvre de manière sécurisée car il ne dépend pas d'un moyen de géolocalisation. Sur la figure 9, le quadrillage de géolocalisation n'apparaît que pour comparaison, mais les coordonnées des équipements ne sont pas utilisées.

Dans une première sous-étape S321 du deuxième mode de réalisation, le moyen de liaison réseau de l'unité mobile de commande diffuse sur le réseau domotique un message de demande de réponse de la part des équipements. Ce message est émis à puissance normale.

Dans une deuxième sous-étape S322 du deuxième mode de réalisation, les équipements ayant reçu le message précédent répondent avec une puissance réduite. Par exemple, sur la figure 9, la portée effective à puissance réduite devient 4 mètres. Toute autre valeur est possible, cette valeur varie normalement d'un équipement à l'autre et n'a pas besoin d'être connue avec précision.

Alternativement, et plus simplement, le message de diffusion est émis à puissance réduite lors de la première sous-étape S321 et le message de réponse est émis à puissance normale lors de la deuxième sous-étape S322.

Ainsi, l'unité mobile de commande cesse d'être à portée d'un au moins des équipements dès qu'on quitte le quatrième contour C4, formé par l'enveloppe de cercles de rayon 4 mètres centrés sur chacun des équipements. Par exemple le cercle CA est centré sur l'équipement référencé 17 et le cercle CB est centré sur l'équipement référencé 18.

Chaque cercle correspond au lieu des points limites de communication entre l'équipement et l'unité mobile de commande. Quand un équipement présente un caractère directif, le cercle est remplacé par un diagramme de rayonnement de type sensiblement elliptique comme représenté en trait pointillé sous la référence CC pour un diagramme de rayonnement de l'équipement de référence 11.

La valeur de portée est choisie suffisante pour qu'il y ait chevauchement des cercles ou diagrammes de rayonnement et pour obtenir un seul contour contenant l'ensemble des équipements de l'installation.

Si le moyen de liaison réseau de l'unité mobile de commande ne reçoit aucune réponse au message diffusé lors de la première sous-étape S322, alors l'unité mobile de commande RCU est hors du quatrième contour C4, et il y a effacement automatique (ou plus généralement invalidation) de la clé commune.

Dans une variante d'exécution du procédé selon l'invention, l'étape de localisation de l'unité mobile de commande par rapport au contour est réalisée au niveau de l'unité mobile de commande.

La figure 10 représente partiellement l'unité mobile de commande pour illustrer des détails de réalisation. Comme mentionné précédemment, le moyen de liaison réseau 45 est préférentiellement réalisé sous forme d'un dispositif matériellement séparé mais intégrable à un téléphone mobile pour constituer une unité mobile de commande 40. Ainsi, le moyen de liaison réseau bénéficie de toutes les interfaces, du téléphone mobile et de ses programmes applicatifs résidents ou téléchargeables. Cependant, le moyen de liaison réseau contient de manière indépendante, et non lisible par des programmes du téléphone mobile, la clé commune en clair HK dans une mémoire de clé commune 47 ainsi que tout ou partie des moyens de décryptage 49 d'un message contenant la clé commune.

Ainsi, la clé commune est par exemple transmise au moyen de liaison réseau sous forme cryptée comme indiqué précédemment, mais ne peut être finalement décryptée qu'à l'intérieur du moyen de liaison réseau et n'est contenue que dans ce moyen de liaison réseau.

Le moyen de liaison réseau comprend également un moyen d'invalidation 48 de la clé commune. Par moyen d'invalidation, on entend tout dispositif matériel ou logiciel soit permettant d'effacer automatiquement ou de modifier automatiquement le contenu de la mémoire de clé commune, soit permettant d'inhiber automatiquement l'utilisation de la clé commune par le moyen de liaison réseau.

Le moyen d'invalidation peut être activé par plusieurs échecs successifs d'authentification de l'utilisateur de l'unité mobile de commande à l'aide d'un code PIN, après une mise sous tension du moyen de liaison.

Le moyen d'invalidation est également activable pendant la quatrième étape S4 du procédé de commande.

Le moyen d'invalidation peut cependant rester inactif tant qu'une commande spécifique d'installateur n'a pas été exécutée. Une commande spécifique d'installateur est par exemple une commande de configuration des actionneurs. Alternativement, l'installateur doit s'authentifier en tant qu'installateur via le réseau de communication GSM auprès du serveur distant et celui-ci ne transmet la clé commune qu'après activation du moyen d'invalidation.

Alternativement, seul le propriétaire de l'installation peut introduire un code PIN (ou une empreinte digitale ou tout moyen d'identification biométrique) pour valider un transfert ou un décodage de clé commune. Pendant cette phase de validation par le propriétaire, il peut lui être demandé si les droits d'utilisation sont permanents. Si la réponse est positive, alors le moyen d'invalidation sera désactivé.

Il est ainsi possible de distinguer facilement un utilisateur d'un premier type comme un installateur, d'un utilisateur d'un deuxième type comme le propriétaire ou ses proches, munis de droits permanents.

Ainsi, le moyen d'invalidation n'est jamais actif, du moins dans les cas d'exécution de la quatrième étape S4, si le moyen de liaison réseau est associé à un téléphone mobile utilisateur. Un utilisateur disposant d'un téléphone mobile associé à un moyen de liaison réseau selon l'invention a donc l'assurance de pouvoir quitter son domicile et ses abords en conservant la clé commune.

Inversement, si l'unité mobile de commande est un outil d'installation, alors la clé commune est automatiquement effacée quand l'installateur quitte le bâtiment ou ses abords.

**Revendications**

1. Procédé de fonctionnement d'une unité mobile de commande (40) destinée à faire partie d'une installation domotique (100) comprenant des éléments (11, 12, 13, 14, 15, 16, 17, 18) incluant des équipements fixés dans un bâtiment, les éléments de l'installation communiquant sur un réseau domotique (20), chaque élément étant muni d'un identifiant qui lui est propre et d'une clé d'authentification, dite « clé commune » identique pour tous les éléments du réseau domotique et authentifiant l'appartenance d'un élément au réseau domotique, **caractérisé en ce qu'**il comprend :

   - une étape de localisation de l'unité mobile de commande par rapport à un contour (C1 ; C2 ; C3) contenant les éléments de l'installation domotique, l'unité mobile comprenant un moyen (45) de liaison réseau au réseau domotique,
   - une étape d'invalidation automatique de la clé commune contenue dans l'unité mobile de commande dans le cas où l'unité mobile de commande est située à l'extérieur du contour.

2. Procédé de fonctionnement selon la revendication 1, **caractérisé en ce que** le contour est défini par géolocalisation, l'unité mobile de commande comprenant un moyen de localisation (LOC) délivrant une information de position.

3. Procédé de fonctionnement selon la revendication 2, **caractérisé en ce que** l'information de position est définie par un maillage spatial apte à différencier les positions respectives de deux éléments de l'installation domotique.

4. Procédé de fonctionnement selon la revendication 1, **caractérisé en ce que** le contour est défini par une enveloppe des limites de communication radio entre l'unité mobile de commande et chaque équipement.

5. Procédé de fonctionnement selon la revendication 4, **caractérisé en ce qu'**il comprend une étape de diffusion d'un message de demande de réponse par l'unité mobile de commande et une étape d'émission d'un message de réponse par chaque équipement ayant reçu le premier message.

6. Procédé de fonctionnement selon la revendication 5, **caractérisé en ce qu'**une des étapes d'émission est réalisée à puissance réduite.

7. Procédé de fonctionnement selon l'une au moins des revendications précédentes, **caractérisé en ce que** l'étape d'invalidation comprend l'effacement de la clé commune et/ou un blocage de l'utilisation de la clé commune contenue dans l'unité mobile de commande.

8. Procédé de fonctionnement selon l'une au moins des revendications 1 à 6, **caractérisé en ce que** l'étape d'invalidation comprend un changement de la clé commune contenue dans tous les éléments, à l'exception de l'unité mobile de commande.

9. Procédé de fonctionnement selon l'une au moins des revendications précédentes, **caractérisé en ce que** l'étape d'invalidation est activée si l'utilisateur de l'unité mobile de commande a été identifié en tant qu'utilisateur particulier d'un premier type et/ou n'est pas activée si l'utilisateur de l'unité mobile de commande a été identifié en tant qu'utilisateur particulier d'un deuxième type.

10. Procédé de fonctionnement selon la revendication 9, **caractérisé en ce que** l'identification en tant qu'utilisateur particulier résulte de l'un au moins des événements suivants :

    - réception d'une commande particulière par l'unité mobile de commande,
    - émission d'une commande particulière par l'unité mobile de commande.

11. Unité mobile de commande (40) comprenant :

    - un moyen (45) de liaison à un réseau domotique, comprenant au moins une mémoire (47) de clé commune et apte à communiquer sur un réseau domotique (20) à l'aide de messages authentifiés grâce à la clé commune, le moyen de liaison comprenant un moyen (48) d'invalidation automatique de la clé commune ; et
    - des moyens matériels (41, 42, 43, 45, 46, 47, 48, 49) et/ou logiciels de mise en oeuvre du procédé de fonctionnement selon l'une des revendications 1 à 10.

12. Unité mobile de commande selon la revendication précédente, **caractérisé en ce que**, quand il est activé, le moyen d'invalidation inhibe la clé commune quand aucun signal de réponse n'est reçu en réponse à un message d'interrogation des équipements du réseau, émis par le moyen de liaison.

13. Unité mobile de commande selon la revendication 11 ou 12, **caractérisé en ce que** le moyen (45) de liaison comprend des moyens de connexion à un téléphone mobile.

14. Installation (100) comprenant une unité mobile de commande (40) selon l'une des revendications 11 à 13.

**Patentansprüche**

1. Verfahren für den Betrieb einer mobilen Steuereinheit (40), die dazu bestimmt ist, Bestandteil einer Domotikanlage (100) zu sein, welche Elemente (11, 12, 13, 14, 15, 16, 17, 18) umfasst, die in einem Gebäude befestigte Einrichtungen beinhalten, wobei die Elemente der Anlage über ein Domotiknetz (20) kommunizieren, wobei jedes Element mit einer ihm eigenen Kennung und mit einem Authentifizierungsschlüssel, "gemeinsamer Schlüssel" genannt, der für alle Elemente des Domotiknetzes identisch ist und die Zugehörigkeit eines Elements zu dem Domotiknetz authentifiziert, ausgestattet ist, **dadurch gekennzeichnet, dass** es umfasst:

    - einen Schritt der Lokalisierung der mobilen Steuereinheit bezüglich einer Kontur (C1; C2; C3), welche die Elemente der Domotikanlage enthält, wobei die mobile Steuereinheit ein Mittel (45) zur Netzverbindung mit dem Domotiknetz umfasst,
    - einen Schritt des automatischen Ungültigmachens des gemeinsamen Schlüssels, der in der mobilen Steuereinheit enthalten ist, in dem Falle, wenn sich die mobile Steuereinheit außerhalb der Kontur befindet.

2. Betriebsverfahren nach Anspruch 1, **dadurch gekennzeichnet, dass** die Kontur durch Geolokalisierung definiert wird, wobei die mobile Steuereinheit ein Lokalisierungsmittel (LOC) umfasst, das eine Positionsinformation liefert.

3. Betriebsverfahren nach Anspruch 2, **dadurch gekennzeichnet, dass** die Positionsinformation durch ein räumliches Gitter definiert wird, das geeignet ist, die jeweiligen Positionen von zwei Elementen der Domotikanlage zu unterscheiden.

4. Betriebsverfahren nach Anspruch 1, **dadurch gekennzeichnet, dass** die Kontur durch eine Hülle der Grenzen der Funkkommunikation zwischen der mobilen Steuereinheit und jeder Einrichtung definiert wird.

5. Betriebsverfahren nach Anspruch 4, **dadurch gekennzeichnet, dass** es einen Schritt des Rundsendens einer Antwortanforderungsnachricht durch die mobile Steuereinheit und einen Schritt des Sendens einer Antwortnachricht durch jede Einrichtung, welche die erste Nachricht empfangen hat, umfasst.

6. Betriebsverfahren nach Anspruch 5, **dadurch gekennzeichnet, dass** einer der Schritte des Sendens mit verminderter Leistung durchgeführt wird.

7. Betriebsverfahren nach wenigstens einem der vorhergehenden Ansprüche, **dadurch gekennzeichnet, dass** der Schritt des Ungültigmachens die Löschung des gemeinsamen Schlüssels und/oder eine Blockierung der Verwendung des gemeinsamen Schlüssels, der in der mobilen Steuereinheit enthalten ist, umfasst.

8. Betriebsverfahren nach wenigstens einem der Ansprüche 1 bis 6, **dadurch gekennzeichnet, dass** der Schritt des Ungültigmachens eine Änderung des enthaltenen gemeinsamen Schlüssels in allen Elementen mit Ausnahme der mobilen Steuereinheit umfasst.

9. Betriebsverfahren nach wenigstens einem der vorhergehenden Ansprüche, **dadurch gekennzeichnet, dass** der Schritt des Ungültigmachens aktiviert wird, falls der Benutzer der mobilen Steuereinheit als spezieller Benutzer eines ersten Typs identifiziert worden ist, und/oder nicht aktiviert wird, falls der Benutzer der mobilen Steuereinheit als spezieller Benutzer eines zweiten Typs identifiziert worden ist.

10. Betriebsverfahren nach Anspruch 9, **dadurch gekennzeichnet, dass** die Identifizierung als spezieller Benutzer aus wenigstens einem der folgenden Ereignisse resultiert.

   - Empfang eines speziellen Befehls durch die mobile Steuereinheit,
   - Senden eines speziellen Befehls durch die mobile Steuereinheit.

11. Mobile Steuereinheit (40), welche umfasst:

   - ein Mittel (45) zur Verbindung mit einem Domotiknetz, das wenigstens einen Speicher (47) für einen gemeinsamen Schlüssel umfasst und geeignet ist, dank des gemeinsamen Schlüssels über ein Domotiknetz (20) mithilfe authentifizierter Nachrichten zu kommunizieren, wobei das Verbindungsmittel ein Mittel (48) zum automatischen Ungültigmachen des gemeinsamen Schlüssels umfasst; und
   - Hardwaremittel (41, 42, 43, 45, 46, 47, 48, 49) und/oder Softwaremittel zur Durchführung des Betriebsverfahrens nach einem der Ansprüche 1 bis 10.

12. Mobile Steuereinheit nach dem vorhergehenden Anspruch, **dadurch gekennzeichnet, dass**, wenn es aktiviert ist, das Mittel zum Ungültigmachen den gemeinsamen Schlüssel sperrt, wenn in Reaktion auf eine Nachricht zur Abfrage der Einrichtungen des Netzes, die von dem Verbindungsmittel gesendet wird, kein Antwortsignal empfangen wird.

13. Mobile Steuereinheit nach Anspruch 11 oder 12, **da-**

**durch gekennzeichnet, dass** das Verbindungsmittel (45) Mittel zur Verbindung mit einem Mobiltelefon umfasst.

14. Anlage (100), welche eine mobile Steuereinheit (40) nach einem der Ansprüche 11 bis 13 umfasst.

**Claims**

1. A method of operating a mobile control unit (40) intended to form part of a home-automation installation (100) comprising elements (11, 12, 13, 14, 15, 16, 17, 18) including appliances fixed in a building, the elements of the installation communicating on a home-automation network (20), each element being provided with its own specific identifier and with an authentication key, termed "common key", identical for all the elements of the home-automation network and authenticating an element's membership of the home-automation network, **characterized in that** it comprises:

   - a step of locating the mobile control unit with respect to a contour (C1; C2; C3) containing the elements of the home-automation installation, the mobile unit comprising a means (45) for network linking to the home-automation network,
   - a step of automatically invalidating the common key contained in the mobile control unit in the case where the mobile control unit is situated outside the contour.

2. The operating method as claimed in claim 1, **characterized in that** the contour is defined by geolocation, the mobile control unit comprising a localization means (LOC) delivering a position information.

3. The operating method as claimed in claim 2, **characterized in that** the position information is defined by a spatial mesh able to differentiate the respective positions of two elements of the home-automation installation.

4. The operating method as claimed in claim 1, **characterized in that** the contour is defined by an envelope of the limits of radio communication between the mobile control unit and each appliance.

5. The operating method as claimed in claim 4, **characterized in that** it comprises a step of broadcasting a response request message by the mobile control unit and a step of transmitting a response message by each appliance that received the first message.

6. The operating method as claimed in claim 5, **characterized in that** one of the transmission steps is carried out at reduced power.

**7.** The operating method as claimed in at least one of the preceding claims, **characterized in that** the invalidation step comprises the erasure of the common key and/or a blocking of the use of the common key contained in the mobile control unit.

**8.** The operating method as claimed in at least one of claims 1 to 6, **characterized in that** the invalidation step comprises a change of the common key contained in all the elements, with the exception of the mobile control unit.

**9.** The operating method as claimed in at least one of the preceding claims, **characterized in that** the invalidation step is activated if the user of the mobile control unit has been identified as a particular user of a first type and/or is not activated if the user of the mobile control unit has been identified as a particular user of a second type.

**10.** The operating method as claimed in claim 9, **characterized in that** identification as a particular user results from at least one of the following events:

- receipt of a particular command by the mobile control unit,
- transmission of a particular command by the mobile control unit.

**11.** A mobile control unit (40) comprising:

- a means (45) for linking to a home-automation network, comprising at least one common key memory (47) and able to communicate on a home-automation network (20) with the aid of messages authenticated by virtue of the common key, the means for linking comprising a means (48) for automatically invalidating the common key, and
- hardware (41, 42, 43, 45, 46, 47, 48, 49) and/or software means for implementing the operating method as claimed in one of claims 1 to 10.

**12.** The mobile control unit as claimed in the preceding claim, **characterized in that**, when it is activated, the invalidating means inhibits the common key when no response signal is received in response to a network appliances interrogation message, transmitted by the linking means.

**13.** The mobile control unit as claimed in claim 11 or 12, **characterized in that** it comprises means for connecting to a mobile telephone.

**14.** An installation (100) comprising a mobile control unit (40) as claimed in one of claims 11 to 13.

**Fig. 1**

**Fig. 2**

Fig. 3

| Disposer l'unité mobile de commande RCU dans le bâtiment comprenant un réseau domotique de clé commune HK | S1 |

| Transmettre la clé commune HK à l'unité mobile de commande RCU par un processus sécurisé et enregistrer HK dans l'unité mobile de commande | S2 |

| Vérifier périodiquement que l'unité mobile de commande RCU est dans un contour C du bâtiment | S3 |

| Si l'unité mobile de commande RCU est hors du contour, alors effacer automatiquement la clé commune dans l'unité mobile de commande RCU | S4 |

Fig. 4

| Définir le contour par géolocalisation | S31 |

Fig. 5

| Définir le contour par la portée radio des équipements du réseau domotique | S32 |

| Diffuser, avec puissance d'émission normale, une demande de réponse des équipements | S321 |

| Répondre avec puissance d'émission réduite | S322 |

Fig. 6

| Si l'unité mobile de commande RCU est hors du contour, alors changer automatiquement la clé commune dans l'ensemble des équipements liés au réseau domotique, sauf l'unité mobile de commande RCU | S41 |

## Fig. 7

C2

11

16

YMAX + 4

YMAX

YMIN

YMIN - 4

XMIN - 4    XMIN

XMAX    XMAX + 4

## Fig. 8

SA

SB

C3

17

18

EP 2 633 507 B1

## Fig. 9

## Fig. 10

16

## RÉFÉRENCES CITÉES DANS LA DESCRIPTION

**Documents brevets cités dans la description**

- WO 03007266 A
- WO 03088486 A
- US 7724687 B
- WO 03081352 A
- US 7683754 B
- WO 2010049383 A
- EP 0973126 A
- EP 1164540 A
- US 6535107 B
- EP 1482718 A
- EP 0913979 A
- US 20020031228 A
- DE 102005038471
- DE 102007059246
- WO 0057375 A
- WO 0171685 A
- FR 2898719
- FR 2924890
- US 7289014 B
- US 6563430 B
- US 7363028 B
- US 7110761 B